# EUROPEAN PATENT APPLICATION

(11) **EP 4 813 473 A1**
(43) Date of publication of application: **30.09.2026**
(21) Application number: 24893963.9
(22) Date of filing: 30.10.2024
(51) Int. Cl.: A62C 5/00, A62C 35/02, A62D 1/06, C09K 3/30

(54) **AEROSOL GAS EJECTOR AND INSPECTION METHOD THEREFOR**

(30) Priority: 21.11.2023 JP 2023197450
(71) Applicant: Yamato Protec Corporation, Tokyo 108-0071 (JP)
(72) Inventor: KUBOTA, Akifumi, Tokyo 108-0071 (JP); ENDO, Tatsuki, Tokyo 108-0071 (JP); ZHAO, Mingxiu, Tokyo 108-0071 (JP)
(74) Representative: Mewburn Ellis LLP
(86) International application number: PCT/JP2024/038706
(87) International publication number: WO 2025/109971

(57) **Abstract**

In order to provide an aerosol gas discharge device in which it is possible to inspect a fire extinguishing agent with a simple method, and an inspection method for the aerosol gas discharge device, this aerosol gas discharge device comprises: a fire extinguishing agent that generates an aerosol through thermal decomposition; an enclosure configured to accommodate the fire extinguishing agent; an discharge port from which the generated aerosol is jetted outside the enclosure; and an inspection port including a recess provided to the enclosure, a fire extinguishing agent that is for inspection and that is stored in the recess, and a plug for sealing the recess.

## Description

### TECHNICAL FIELD

The present invention relates to an aerosol gas discharge device and a method for inspecting the same.

### PRIOR ARTS

The applicant disclosed in Patent Literature 1 (International Publication No. WO2017/134703) a fire extinguishing composition that can extinguish and suppress fires by generating an aerosol through combustion.

### CITATION LIST

### Patent Literature

Patent Literature 1: WO 2017/134703

### SUMMARY OF INVENTION

### Technical Problem

The applicant continued to develop a practical fire extinguishing equipment incorporating the fire extinguishing composition, and created an aerosol gas discharge device. It is desirable that aerosol gas discharge device as the fire extinguishing equipment is able to easily carry out periodic or irregular inspections of the fire extinguishing agent.

Therefore, an object of the present invention is to provide an aerosol gas discharge device in which it is possible to inspect a fire extinguishing agent with a simple method, and an inspection method for the aerosol gas discharge device.

### Solution to Problem

In order to solve the above-mentioned problems, one embodiment of the present invention provides an aerosol gas discharge device comprising:
a fire extinguishing agent that generates an aerosol through thermal decomposition;
an enclosure configured to accommodate the fire extinguishing agent;
a discharge port from which the generated aerosol is jetted outside the enclosure; and
an inspection port including a recess portion provided to the enclosure, a fire extinguishing agent for inspection stored in the recess portion, and a plug for sealing the recess portion.

In the aerosol gas discharge device of the present invention, it is preferable that the inspection port includes a plurality of inspection ports arranged on an exterior surface of the enclosure.

In the aerosol gas discharge device of the present invention, it is preferable that the plurality of inspection ports is arranged in substantially concentric patterns.

In the aerosol gas discharge device of the present invention, it is preferable that the plurality of inspection ports is arranged at substantially equally spaced in the circumferential direction.

In the aerosol gas discharge device of the present invention, it is preferable that the interior of the inspection port is connected to the interior of the enclosure.

Another embodiment of the present invention provides a method for inspecting an aerosol gas discharge device according to claim 1, comprising the steps of:
opening the inspection port to remove the fire extinguishing agent for inspection, and
inspecting the fire extinguishing agent for inspection.

### EFFECTS OF THE INVENTION

According to the present invention, an inspection port is provided in the enclosure of the aerosol gas discharge device. Therefore, it is possible to inspect the fire extinguishing agent by the simple method of opening the inspection port, removing the fire extinguishing agent for inspection, and examining it.

### BRIEF DESCRIPTION OF THE DRAWINGS

FIG. 1 is an exploded view showing the overall configuration of the aerosol gas discharge device 1 according to one embodiment of the present invention.
FIG. 2 is a front view, a side view, and a top view showing the outline of the discharge device body 10.
FIG. 3 is a partial cross-sectional view showing the internal structure of the discharge device body 10.
FIG. 4 is a front view, a partially cross-sectional side view, and a top view showing the outline of the enclosure 15.
FIG. 5 is a front view, a side view, and an A-A-line cross-sectional view showing the discharge port 17 and the inspection port 19.
FIG. 6 is a front view and a partially cross-sectional side view showing the outline of the inspection port 19.
FIG. 7 is a diagram explaining the arrangement of the fire extinguishing agent 13.
FIG. 8 is a perspective view showing the shapes of the fire extinguishing agents 131 to 134.
FIG. 9 is a diagram showing a schematic diagram of the ejection of the aerosol gas.

### Embodiments for achieving the invention

In the following, the typical embodiments of the aerosol gas discharge device and the method of using the same according to the present invention are explained in detail by referring the drawings. Note that, the present invention is not limited to these drawings. Since the drawings are to use for explaining the present invention conceptually, for showing the present invention clearly, there is a case where sizes, ratios or number may be shown in the exaggerated or simplified manner, as occasion demand.

An aerosol gas discharge device 1 is installed in an area (protection area) of a building that is to be the target of fire extinguishing, and ejects an aerosol into the protection area when a fire occurs. For example, the aerosol gas discharge device 1 is attached to the ceiling or wall of a structure.

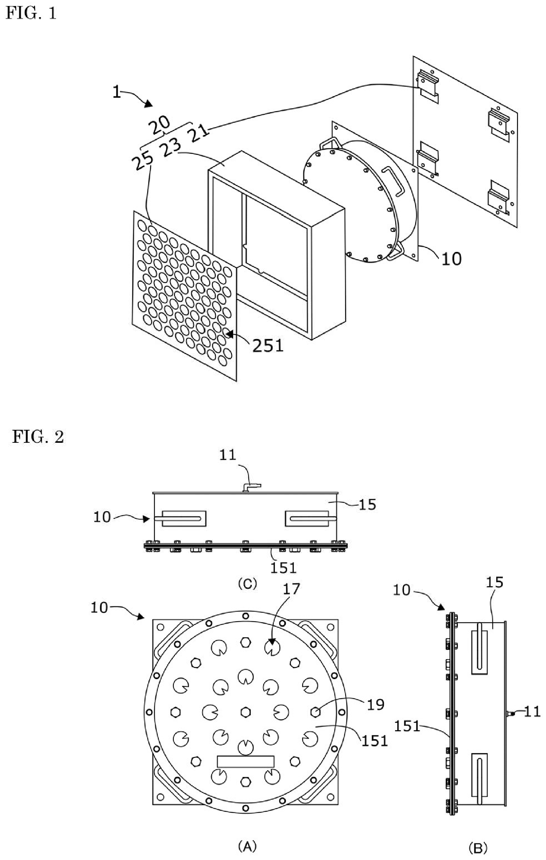

As shown in FIG. 1, the aerosol gas discharge device 1 has a discharge device body 10. The material of the discharge device body 10 can be a metal or its alloy, and among these, stainless steel is suitably used. The dimensions of the discharge device body 10 in this embodiment are an outer diameter of approximately 500 mm and a thickness of approximately 150 mm, but the present invention is not limited thereto.

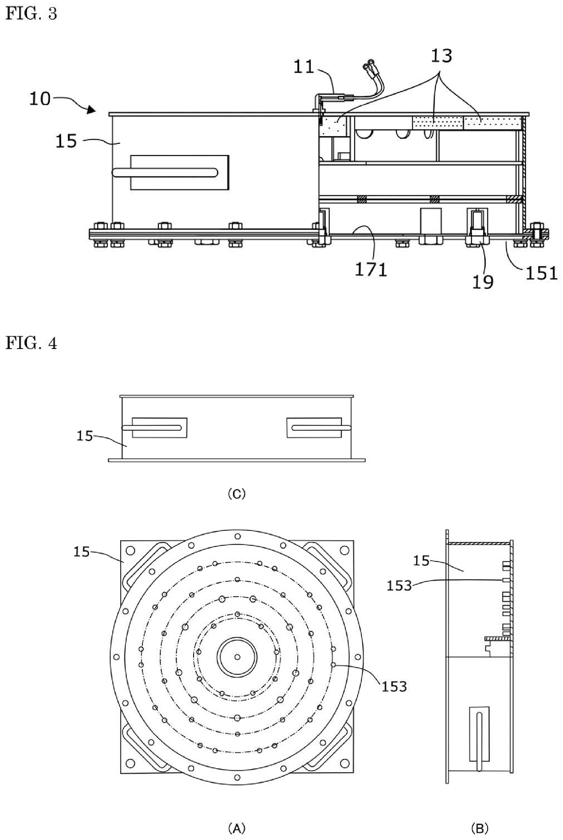

As shown in FIG. 2 and FIG. 3, the discharge device body 10 may include, as components, an ignition unit 11, a fire extinguishing agent 13, an enclosure 15, a discharge port 17, and an inspection port 19. In the following, these components will be described in order.

The ignition unit 11 is a component that initiates the reaction of the fire extinguishing agent 13, and may also be called an ignition device.

The ignition unit 11 is mainly composed of an electric heater and an initiating agent (ignition agent) (neither of which is shown). The initiating agent generates heat in response to the heat generated by the electric heater, thereby initiating the thermal decomposition reaction of the fire extinguishing agent 13.

The fire extinguishing agent 13 generates the aerosol by thermal decomposition. The fire extinguishing agent 13 may be wrapped in a protective film such as aluminum to prevent moisture absorption and protect the surface. In this embodiment, the total weight of the fire extinguishing agent 13 loaded in one aerosol gas discharge device 1 can be set to approximately 2.0 to 2.2 kg, but is not limited thereto.

In the following, the fire extinguishing agent 13 will be described in more detail. However, the fire extinguishing agent may have any composition as long as it generates a fire extinguishing aerosol (for example, potassium radicals).

It is preferable that the fire extinguishing composition contains 20 to 50% by mass of a fuel (component A) and 80 to 50% by mass of a chlorate (component B), and further, contains 6 to 1000 parts by mass of a potassium salt (component C) with respect to 100 parts by mass of the total amount of the fuel and the chlorate, and has a thermal decomposition initiation temperature in the range of higher than 90°C to 260°C.

The fuel as the component A is a component for generating thermal energy by combustion together with the chlorate as the component B to generate an aerosol (potassium radical) derived from the potassium salt of the component C.

As the fuel for the component A, preferable is, for example, at least one selected from the group consisting of dicyandiamide, nitroguanidine, guanidine nitrate, urea, melamine, melamine cyanurate, Avicel, guar gum, sodium carboxymethylcellulose, potassium carboxymethylcellulose, ammonium carboxymethylcellulose, nitrocellulose, aluminum, boron, magnesium, magnalium, zirconium, titanium, titanium hydride, tungsten, and silicon.

The chlorate of the component B is a strong oxidizing agent, and is a component for generating thermal energy by combustion together with the fuel of component A and generating an aerosol (potassium radical) derived from the potassium salt of component C.

As the chlorate of the component B, preferable is, for example, at least one selected from potassium chlorate, sodium chlorate, strontium chlorate, ammonium chlorate and magnesium chlorate.

Here, the content ratio of the fuel of the component A and the chlorate of the component B in the total 100% by mass is as follows:
Component A: 20 to 50% by mass,
   preferably 25 to 40% by mass,
   more preferably 25 to 35% by mass,
Component B: 80 to 50% by mass,
   preferably 75 to 60% by mass,
   more preferably 75 to 65% by mass.

Next, the potassium salt of the component C is a component for generating the aerosol (potassium radical) by the thermal energy generated by the combustion of the component A and the component B.

As the potassium salt of the component C, preferable is, for example, at least one selected from potassium acetate, potassium propionate, monopotassium citrate, dipotassium citrate, tripotassium citrate, monopotassium trihydrogen ethylenediaminetetraacetate, dipotassium dihydrogen ethylenediaminetetraacetate, tripotassium monohydrogen ethylenediaminetetraacetate, tetrapotassium ethylenediaminetetraacetate, potassium hydrogen phthalate, dipotassium phthalate, potassium hydrogen oxalate, dipotassium oxalate, and potassium bicarbonate.

The content ratio of the component C is preferably 6 to 1000 parts by mass, and more preferably 10 to 900 parts by mass with respect to 100 parts by mass of the total amount of the component A and the component B.

Furthermore, the fire extinguishing composition has a thermal decomposition initiation temperature in the range of greater than 90°C and up to 260°C, preferably greater than 150°C and up to 260°C. Such a range of the thermal decomposition initiation temperature can be adjusted by combining the above-mentioned components A, the component B and the component C in the above-mentioned ratio.

In the fire extinguishing composition, the components A and the component B are automatically ignited and burned by the heat from the ignition device, and the aerosol (potassium radical) derived from the component C is generated.

In this embodiment, the fire extinguishing composition is used as a molded product. The molded product preferably has an apparent density of 1.0 g/cm³ or more, and for example, can be formed into the shape of granules, pellets of a desired shape (cylindrical or the like), tablets, spheres, disks, or the like.

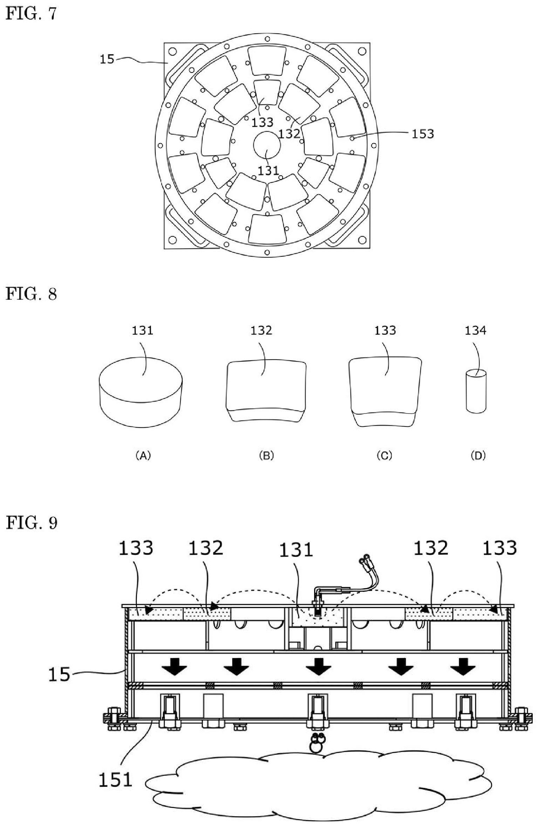

In the illustrated example, four forms of the fire extinguishing agent 131 to 134 are used. That is, as shown in FIG. 8, the fire extinguishing agent 131 (used as the first fire extinguishing agent) and the fire extinguishing agent 134 (used as an inspection fire extinguishing agent) are substantially cylindrical. The fire extinguishing agents 132 and 133 (used as the second and third fire extinguishing agents) are substantially rectangular parallelepiped in shape.

As shown in FIG. 3, the fire extinguishing agent 131 is disposed substantially in the center of the discharge device body 10 and opposite the ignition unit 11. The fire extinguishing agent 131 may have a recess portion for inserting the tip of the ignition unit 11. The fire extinguishing agent 131 has a larger outer diameter and thickness (height) than the fire extinguishing agent 134.

The fire extinguishing agent 134 has an outer diameter and height smaller than the inner diameter and height of the recess portion 191 so as to be accommodated in the inspection port 19.

The fire extinguishing agents 132 and 133 are arranged in a substantially concentric manner within the discharge device body 10. In this embodiment, the fire extinguishing agents 132 and 133 are arranged in two layers so as to surround the fire extinguishing agent 131, but the fire extinguishing agent arrangement is not limited thereto. In the example of FIG. 7, two types of the fire extinguishing agents 132 and 133 having different circumferential widths are arranged in the inner ring.

The fire extinguishing agents 132 and 133 that constitute the inner ring are spaced apart from the fire extinguishing agent 131. This is to ensure a sufficient period of time from the start of reaction of the fire extinguishing agent 131 to the start of reaction of the fire extinguishing agents 132 and 133.

The fire extinguishing agents 132 that constitute the outer ring are arranged evenly with a distance larger than the fire extinguishing agents in the inner ring. This is to make the amount of the fire extinguishing agent roughly equal in the inner and outer rings, making the internal pressure of the discharge device body 10 roughly uniform over time when the aerosol is generated, thereby ejecting the aerosol gas stably and continuously.

As shown in FIG. 7 and FIG. 8(B) and (C), the circumferential width of the surface of the fire extinguishing agents 132 and 133 facing the center of the enclosure 15 (or fire extinguishing agent 131) is narrower than the circumferential width of the surface opposite to that surface (i.e., the surface facing the peripheral wall of the enclosure 15). Therefore, it can be said that the fire extinguishing agents 132 and 133 are roughly fan-shaped. This shape allows the fire extinguishing agents 132 and 133 to be accommodated in the enclosure 15 efficiently (i.e., in a space-saving manner).

Therefore, by arranging the fire extinguishing agents 131, 132, and 133 in substantially concentric patterns, the thermal decomposition reaction initiated in the fire extinguishing agent 131 can be spread as evenly as possible to the fire extinguishing agents 132 and 133, and the reaction time of the fire extinguishing agents can be sufficiently extended. Therefore, it is possible to ensure that a sufficient amount of the aerosol is ejected for a sufficient period of time.

Further, as shown in FIG. 8(B) and (C), the width (length in the circumferential direction) of the fire extinguishing agent 132 is larger than that of the fire extinguishing agent 133. By using different fire extinguishing agents 132 and 133 in this way, it is possible to arrange the fire extinguishing agent 13 sufficiently and appropriately in accordance with the dimensions of the enclosure 15.

Next, the enclosure 15 will be described.

The enclosure 15 stores the fire extinguishing agent 13 in isolation from the outside air. The enclosure 15 is substantially cylindrical and has a space therein for accommodating the fire extinguishing agent 13. In this embodiment, the outer diameter of the enclosure 15 is approximately 500 [mm], but is not limited thereto.

For example, as shown in FIG. 4(A) and (B), multiple pins 153 are provided inside the enclosure 15. The multiple pins 153 may be arranged, for example, in substantially concentric patterns. As shown in FIG. 7, the multiple pins 153 are arranged so that each of the four peripheral surfaces of the substantially rectangular parallelepiped fire extinguishing agents 132, 133 (except for the surface of the fire extinguishing agent 132 that forms the outer ring on the peripheral wall side of the enclosure 15) faces the pin 153. This restricts the movement of the fire extinguishing agents 132 and 133, and the fire extinguishing agents 132 and 133 are arranged at the desired positions.

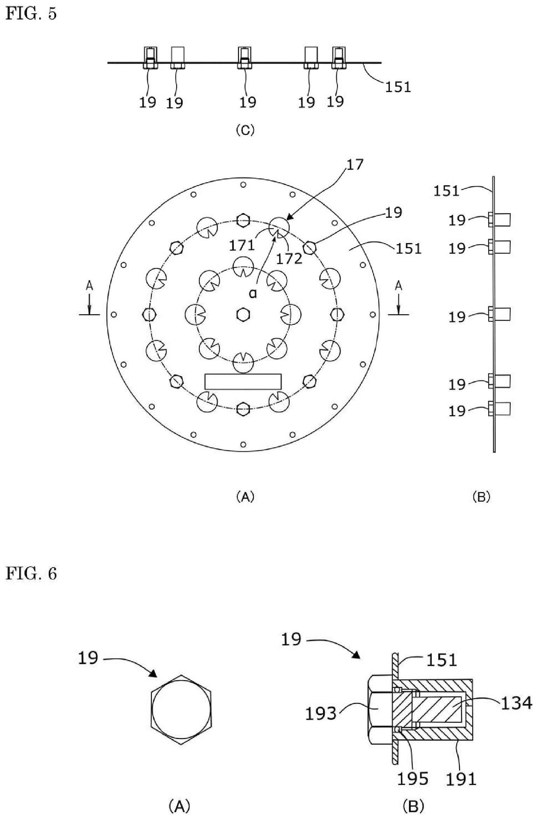

For example, as shown in FIG. 5(A), the discharge port 17 and the inspection port 19 are arranged in a front surface 151 (the surface on the side of the protection area, or it may be said a lid) of the enclosure 15.

The discharge port 17 is an opening for emitting the aerosol gas in the enclosure 15 to the outside. The discharge port 17 is, for example, a substantially circular hole, and it is preferable that a plurality of discharge ports 17 are provided, but the number of discharge ports 17 may be one.

The discharge port 17 may have a protrusion portion 172 that protrudes from the inner edge of the discharge port 17 toward the center of the opening. By forming the protrusion portion 172 on the discharge port 17, the discharge port 17 opens evenly, this results in improving the diffusion of the aerosol gas ejection. Further, the protrusion portion 172 is useful for suppressing the noise caused by the bursting of the discharge port 17, which is advantageous when the aerosol gas discharge device 1 is installed in, for example, a server room.

In the illustrated example, all of the discharge ports 17 have protrusion portion 172, but some discharge ports 17 may not have protrusion portion 172.

For example, the protrusion portion 172 has a fan shape. The angle α of the protrusion portion 172 shown in FIG. 5 is less than 180 degrees, more preferably an acute angle, and further more preferably 30 degrees to 40 degrees. In the illustrated example, all of the protrusion portions 172 have the same angle α, but each protrusion portion 172 may have a different angle.

The dimensions of the protrusion portion 172 may be designed appropriately depending on, for example, the dimensions of the aerosol gas discharge device 1 and the discharge port 17, the aerosol gas ejecting conditions, and the like.

In the illustrated example, the protrusion portions 172 have approximately the same dimensions and their tips point in the radial direction (i.e., outwardly) from the front surface 151, but are not limited thereto.

From the viewpoint of ejecting the aerosol gas evenly into the protection area, it is preferable that the discharge ports 17 are arranged concentrically on the front surface 151 of the enclosure 15 and at equal intervals in the circumferential direction.

For example, one discharge port 17 has an inner diameter of 40 mm, and 16 discharge ports 17 are arranged on the front surface 151 of the enclosure 15, with a total area of approximately 20,000 [mm²], but not limited thereto.

The discharge port 17 is normally sealed with a sheet material 171 to seal the discharge device body 10. As the internal pressure in the enclosure 15 increases, the sheet material 171 is pressed against the discharge port 17 and breaks when contacting with the protrusion port 172. Thereby the discharge port 17 opens, and the aerosol gas is released to the outside through the discharge port 17. The sheet material 171 may be a sheet or film made of metal such as aluminum, but is not limited thereto.

The inspection port 19 is a part for checking the storage status of the fire extinguishing agent 13. In the illustrated example, the inspection port 19 is provided on the front surface 151 to facilitate inspection work, but the inspection port 19 may be provided anywhere on the enclosure 15 as long as the inside thereof has the environment equivalent to that of the inside of the enclosure 15.

As shown in FIG. 6, the inspection port 19 can be configured as a recess portion 191 formed in the front surface 151 of the enclosure 15 and a plug 193 that seals the opening of the recess portion 191.

A predetermined amount of the fire extinguishing agent 134 for inspection is contained in recess portion 191. The fire extinguishing agent 134 for inspection is sealed from the outside air by the plug 193 and a sealing material 195 such as an O-ring. The plug 193 can be configured as, for example, a bolt that engages with a groove formed on the inner circumferential surface of the recess portion 191. The amount of the fire extinguishing agent 134 for inspection is smaller than the other fire extinguishing agents 131 to 133, and for example, a weight of about 2 [g] is sufficient.

The inside of the inspection port 19 communicates with the inside (storage space) of the enclosure 15 via a hole formed in the bottom or peripheral wall of the inspection port 19. That is, it can be said that the inspection fire extinguishing agent 134 is in the same environment as the fire extinguishing agent 13. Therefore, by checking the inspection fire extinguishing agent 134, the state of the fire extinguishing agent 13 can be grasped.

The inspection fire extinguishing agent 134 is removed when inspecting the aerosol gas discharge device 1. In this embodiment, 9 inspection ports 19 may be attached to one aerosol gas discharge device 1, but there is no limit to the number of inspection ports 19 that can be installed.

Returning to the explanation of the aerosol gas discharge device 1.

As shown in FIG. 1, the discharge device body 10 is accommodated in a storage box 20 for protection and for mounting on an installation surface. The storage box 20 includes a substantially plate-shaped back plate 21, a storage box enclosure 23 that opens toward the front (protection area side) and rear (opposite the front), and a storage box cover 25.

The back plate 21 is a substantially square plate material. One surface of the back plate 21 is fixed to the installation surface, and the discharge device body 10 is attached to the other surface. The back plate 21 is made of a metal or its alloy, for example, stainless steel.

The storage box enclosure 23 is a substantially square frame that surrounds and protects the discharge device body 10 and is attached to the back plate 21. The material of the storage box enclosure 23 is a metal or its alloy, for example, stainless steel.

The storage box cover 25 is a plate material made of a punched metal 251 having a substantially rectangular shape. The material of the storage box cover 25 is a metal or its alloy, for example, stainless steel. It is preferable that the diameter of each hole formed in the punched metal 251 is larger than the diameter of the discharge port 17, and that the holes are regularly arranged at a predetermined interval.

The aerosol gas discharge device 1 is installed in the following manner.

That is, the back plate 21 is attached to the installation surface. Next, the discharge device body 10 is fixed to the back plate 21, and the storage box enclosure 23 is fixed to the back plate 21. Then, the storage box cover 25 is fixed to the front surface of the storage box enclosure 23.

The operation flow of the aerosol gas discharge device 1 will be described below with reference to FIG. 9.

When a flame occurs in the protection area, starting current flows through the electric wire of the ignition unit 11 based on a control signal from a control panel (not shown). Then, an electric heater (not shown) generates heat, and the initiating fire extinguishing agent reacts.

Starting from the reaction heat of the initiating fire extinguishing agent (not shown), at first, the reaction of the central fire extinguishing agent 13, i.e., fire extinguishing agent 131, starts. Then, the reaction spreads to the entire surrounding fire extinguishing agents 13 (i.e., the fire extinguishing agents 132 and 133), and the entire amount of the fire extinguishing agents 13 loaded in the aerosol gas discharge device 1 react. By designing the arrangement of the fire extinguishing agents 13 in this way, it becomes possible to generate the aerosols stably and continuously.

By the reaction of the fire extinguishing agent 13, the aerosol is generated, and the aerosol fills the enclosure 15 of the discharge device body 10. Thereby, the internal pressure of the enclosure 15 is increased.

When the internal pressure of the enclosure 15 exceeds a predetermined threshold, the sheet material 171 of the discharge port 17 is torn, thereby opening the discharge port 17. As a result, the aerosol gas is ejected from the discharge port 17 through the storage box cover 25 into the protection area, thereby extinguishing or suppressing the flames in the protection area.

Next, the procedure for inspecting the aerosol gas discharge device 1 will be described.

Inspections may be performed periodically, for example every six months or once a year, or irregularly.

The operator of the inspection opens one of the inspection ports 19, removes the inspection fire extinguishing agent 134, and checks or inspects its condition by analysis, visual checking. The inspection port 19 is located on the front surface 151 of the enclosure 15, so that the operator can easily remove it. The removed plug 193 may be returned to the inspection port 19, but the inspection fire extinguishing agent 134 once removed should not be returned.

The inspection items for the fire extinguishing agent 134 may be, for example, any one or any combination of measurement of dimensions and weight; visual inspection for cracks, deformations, scratches, and the like; measurement of water content; measurement of potassium element content; aerosol gas generation performance; and measurement of potassium element concentration in the aerosol gas, but are not limited thereto.

If the inspection fire extinguishing agent 134 that has been removed is in good condition, it can be said that the inspection fire extinguishing agent 134 and the fire extinguishing agent 13 inside the enclosure 15 are in substantially the same environment, and it can be assessed that there is no defect in the fire extinguishing agent 13. Conversely, if the removed inspection fire extinguishing agent 134 is found to be defective, it is assessed that there is a possibility that the fire extinguishing agent 13 in the enclosure 15 is defective, and the aerosol gas discharge device 1 should be replaced or the fire extinguishing agent 13 in the enclosure 15 should be replaced.

In this way, since the inspection port 19 is provided on the front surface 151 of the discharge device body 10, the inspection of the fire extinguishing agent 13 can be carried out by the simple method of opening the inspection port 19, removing the fire extinguishing agent 13 for inspection, and examining it.

In the above, the aerosol gas discharge device and the method of using the same as one embodiment of the present invention has been described, but the present invention is not limited to this, and various design changes are possible as long as the technical concept of the present invention is included, and all such design changes are included in the technical scope of the present invention.

In this embodiment, different shaped fire extinguishing agents 131 to 133 are used, but it is also possible to use only one shaped fire extinguishing agent (for example, fire extinguishing agent 131).

### EXPLANATION OF SYMBOLS

1 Aerosol gas discharge device
10 Discharge device body
11 Ignition unit
13 Fire extinguishing agent
131 to 134 Fire extinguishing agent
15 Enclosure
17 Discharge port
19 Inspection port
191 Recess portion
193 Plug
20 Storage box
21 Back plate
23 Storage box enclosure
25 Storage box cover

## Claims

1. An aerosol gas discharge device comprising:
a fire extinguishing agent that generates an aerosol through thermal decomposition;
an enclosure configured to accommodate the fire extinguishing agent;
a discharge port from which the generated aerosol is jetted outside the enclosure; and
an inspection port including a recess portion provided to the enclosure, a fire extinguishing agent for inspection stored in the recess portion, and a plug for sealing the recess portion.

2. The aerosol gas discharge device according to claim 1, wherein the inspection port includes a plurality of inspection ports arranged on an exterior surface of the enclosure.

3. The aerosol gas discharge device according to claim 2, wherein the plurality of inspection ports are arranged in substantially concentric patterns.

4. The aerosol gas discharge device according to claim 2, wherein the plurality of inspection ports are arranged at substantially equally spaced in the circumferential direction.

5. The aerosol gas discharge device according to claim 1, wherein the interior of the inspection port is connected to the interior of the enclosure.

6. A method for inspecting an aerosol gas discharge device according to claim 1, comprising the steps of:
opening the inspection port to remove the fire extinguishing agent for inspection, and
inspecting the fire extinguishing agent for inspection.
